# EUROPÄISCHE PATENTSCHRIFT

(11) **EP 1 124 903 B1**
(45) Veröffentlichungstag und Bekanntmachung des Hinweises auf die Patenterteilung: **25.06.2003**
(21) Anmeldenummer: 99957270.4
(22) Anmeldetag: 30.10.1999
(51) Int. Cl.: C09B 44/02, C09B 67/22

(54) **KATIONISCHE AZOFARBSTOFFE**
CATIONIC AZO-DYES
COLORANTS AZOIQUES CATIONIQUES

(30) Priorität: 05.11.1998 DE 19851026
(43) Veröffentlichungstag der Anmeldung: 22.08.2001
(73) Patentinhaber: BASF AKTIENGESELLSCHAFT, 67056 Ludwigshafen (DE)
(72) Erfinder: ETZBACH, Karl-Heinz, D-67227 Frankenthal (DE); FREUND, Torsten, D-67117 Limburgerhof (DE); TRESCH, Rainer, D-67133 Maxdorf (DE)
(86) Internationale Anmeldenummer: EP9908274
(87) Internationale Veröffentlichungsnummer: WO00027929

(56) Entgegenhaltungen:
- EP-A- 0 162 409
- DE-A- 2 160 590
- DE-A- 2 218 645
- US-A- 3 957 752

## Beschreibung

Die vorliegende Erfindung betrifft kationische Azofarbstoffe der allgemeinen Formel I 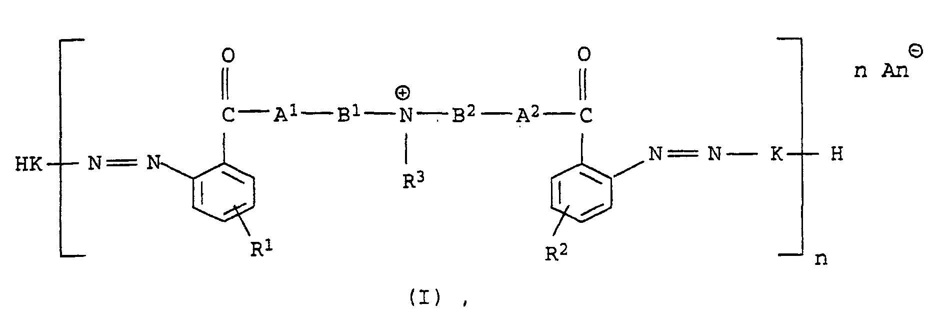 in der
- R¹ und R²: unabhängig voneinander Wasserstoff, Nitro, Halogen, C₁-C₆-Alkyl,
- R³: Wasserstoff, C₁-C₆-Alkyl, das durch 1 oder 2 nicht benachbarte Oxy-, Imino, C₁-C₆-Alkyliminogruppen oder einen Rest 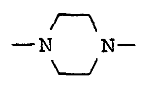 unterbrochen sein kann,
- A¹ und A²: unabhängig voneinander Oxy, Imino oder gegebenenfalls substituiertes C₁-C₆-Alkylimino,
- B¹ und B²: unabhängig voneinander C₁-C₆-Alkylen, das durch 1 oder 2 nichtbenachbarte Oxy-, Imino-, gegebenenfalls substituierte C₁-C₆-Alkyliminogruppen oder einen Rest 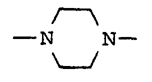 unterbrochen sein kann,
- An⊖: das Äquivalent eines Anions,
- n: die Zahl 1 und
- K: den Rest einer Kupplungskomponente oder den Rest eines Monoazofarbstoffs der Formel 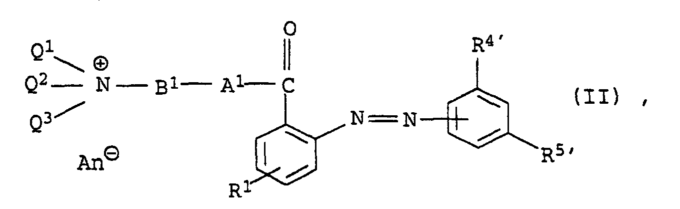
in der
- R^{4'} und R^{5'}: unabhängig voneinander Hydroxy, Amino, Morpholino oder Mono- oder Di-(C₁-C₆)-alkylamino, deren Alkyl-reste gegebenenfalls mit Hydroxy, Amino, Cyano, C₁-C₆-Alkoxycarbonyl, Carbamoyl oder Mono- oder Di-(C₁-C₆)-alkylcarbamoyl substituiert sind und gegebenenfalls durch Oxy unterbrochen sind und
- Q¹, Q² und Q³: unabhängig voneinander Wasserstoff, C₁-C₁₀-Alkyl, das durch 1 bis 4 nichtbenachbarte Oxy-, Imino- und gegebenenfalls substituierte C₁-C₄-Alkyliminogruppen unterbrochen sein kann und das mit Hydroxy, Halogen oder Phenyl substituiert sein kann und Q¹ und Q² zusammen mit dem sie verbindenden Stickstoffatom einen 5- oder 6-gliedrigen heterocyclischen Rest, der gegebenenfalls Stickstoff oder Sauerstoff als weiteres Hereoatom aufweist, bedeuten
und zusätzlich n eine Zahl von 2 bis 8 wenn K für den Rest einer Kupplungskomponente der Formel IIIa' 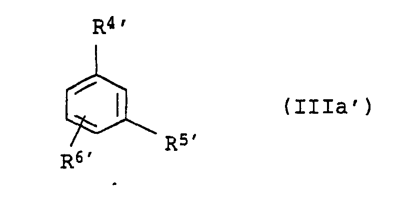 steht, in der
- R^{6'}: Wasserstoff, C₁-C₆-Alkoxy, dessen Alkylrest gegebenenfalls durch Oxy unterbrochen ist, Mono- oder Di-(C₁-C₆)-alkylamino, C₁-C₆-Alkoxycarbonyl, Carbamoyl, Mono- oder Di-(C₁-C₆)-alkylcarbamoyl, Sulfamoyl, Mono- oder Di-(C₁-C₆)-alkylsulfamoyl bedeuten,

Verfahren zu ihrer Herstellung, ihre Verwendung zum Färben und Bedrucken von natürlichen oder synthetischen Substraten sowie ihre Mischungen.

Die DE-A-2 218 645 beschreibt wasserunlösliche Trisazopigmente, die über Triethanolamin verknüpfte Monoazofarbstoffe sind.

Weiterhin sind aus der DE-A-2 160 590 Anthranilsäurederivate bekannt, die über die Estergruppe mit einem Diethanolamin verbrückt sind. Diese Diamine eignen sich zur Herstellung von Polyurethanen.

Daher war es Aufgabe der vorliegenden Erfindung, neue Farbstoffe bereitzustellen, die sich durch vorteilhafte anwendungstechnische Eigenschaften, insbesondere hohe Affinitäten zu den verwendeten Substraten, sowie gute Ausblutechtheit und Lichtechtheit auszeichnen.

Demgemäß wurden die eingangs näher bezeichneten Farbstoffe der Formel I gefunden.

Alle in der obengenannten Formel auftretenden Alkyl- oder Alkylengruppen können sowohl geradkettig als auch verzweigt sein.

Wenn in der obengenannten Formel substituierte Alkylgruppen auftreten, so kommen als Substituenten z.B. Hydroxy und Methoxy in Betracht. Die Alkylgruppen weisen dann in der Regel 1 bis 2 Substituenten auf.

Wenn die Reste Q¹ und Q² zusammen mit dem sie verbindenden Stickstoffatom für einen 5- oder 6-gliedrigen heterocyclischen Rest stehen, der gegebenenfalls Stickstoff oder Sauerstoff als weiteres Heteroatom aufweist, so können gesättigte Reste wie Pyrrolidinyl, Piperidinyl, Morpholinyl, Piperazinyl, das am Stickstoff mit Methyl, Ethyl, Propyl, Isopropyl, n-, iso- und sec.-Butyl, 2-Hydroxyethyl oder 2- oder 3-Hydroxypropyl substituiert sein kann, in Betracht kommen. Ferner können ungesättigte Reste wie Pyrrolyl, Pyrazolyl, Oxazolyl, Isooxazolyl oder Imidazolyl, das in 2- und/oder 4-Stellung durch Methyl, Ethyl, Propyl oder Butyl substituiert sein kann oder N-3-(C₁-C₄)-Alkylimidazolyl, das in 2- und/oder 4-Stellung noch mit Methyl, Ethyl, Propyl oder Butyl substituiert sein kann, in Betracht kommen.

Reste Halogen sind Fluor, Chlor oder Brom.

Reste R¹, R², R³, Q¹, Q² und Q³ sind z.B. Methyl, Ethyl, Propyl, Isopropyl, Butyl, Isobutyl, sec.-Butyl, tert.-Butyl, Pentyl, Isopentyl, Neopentyl, tert.-Pentyl, Hexyl oder 2-Methylpentyl.

Reste R³, Q¹, Q² und Q³ sind weiterhin z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 4-Methoxybutyl, 2- oder 4-Ethoxybutyl, 3,6-Dioxaheptyl, 3,6-Dioxaoctyl, 3,7-Dioxaoctyl, 4,7-Dioxaoctyl, N,N-Dimethylaminoethyl, N,N-Diethylaminoethyl, 3-(N,N-Dimethylamino)-propyl, 3-(N,N-Diethylamino)-propyl, 2-Methylaminoethyl, 2-Ethylaminoethyl, 2-Propylaminoethyl, 2- oder 3-Methylaminopropyl, 2- oder 3-Ethylaminopropyl oder 2- oder 3-Propylaminopropyl.

Reste Q¹, Q² und Q³ sind weiterhin z.B. Heptyl, Octyl, 2-Ethylhexyl, Isooctyl, Nonyl, Isononyl, Decyl (die obigen Bezeichnungen Isooctyl, Isononyl und Isodecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436), 2-Hydroxyethyl, 2- oder 3-Hydroxypropyl, 2- oder 4-Hydroxybutyl, 2-Chlorethyl, 2- oder 3-Chlorpropyl, 2- oder 4-Chlorbutyl, Benzyl, 1- oder 2-Phenylethyl, 2- oder 3-Butoxypropyl, 2- oder 4-Propoxybutyl, 4,8-Dioxadecyl, 3,7-Dioxanonyl, 4,7-Dioxanonyl, 2- oder 4-Butoxybutyl, 3,6,9-Trioxadecyl, 3,6,9-Trioxaundecyl, 3,6,9-Trioxadodecyl, 3,6,9,12-Tetraoxatridecyl, 3,6,9,12-Tetraoxatetradecyl, 4-Hydroxy-2-methyl-3-azabutyl, 4-Hydroxy-3-hydroxymethyl-2-methyl-3-azabutyl, 5-Hydroxy-2-methyl-3-azapentyl, 5-Hydroxy-3-(2-hydroxyethyl)-2-methyl-3-azapentyl, 8-Hydroxy-2-methyl-3-aza-6-oxaoctyl, 11-Hydroxy-2-methyl-3-aza-6,9-dioxaundecyl, 8-Hydroxy-(5-hydroxy-3-oxapentyl)-2-methyl-3-aza-6-oxaoctyl oder 11-Hydroxy-3-(8-hydroxy-3,6-dioxaoctyl)-2-methyl-3-aza-6,9-dioxaundecyl, N,N-Dipropylaminoethyl, N,N-Dibutylaminoethyl,3-(N,N-Dipropylamino)-propyl oder 3-(N,N-Dibutylamino)-propyl.

Reste A sind z.B. Methylimino, Ethylimino, Propylimino, Isopropylimino, Butylimino, Isobutylimino, sec.-Butylimino, tert.-Butylimino, Pentylimino, Isopentylimino, Neopentylimino, tert.-Pentylimino, Hexylimino oder 2-Methylpentylimino.

Reste B¹ und B² sind z.B. Methylen, Ethylen, 1,2- oder 1,3-Propylen, 1,2-, 2,3- oder 1,4-Butylen, (CH₂)₂O(CH₂)₂, (CH₂)₃O(CH₂)₂, ₂, (CH₂)₃O(CH₂)₃, (CH₂)₂O(CH₂)₂O(CH₂)₂, (CH₂)₂NH(CH₂)₂, (CH₂)₃NH(CH₂)₂, (CH₂)₂NH(CH₂)₂NH(CH₂)₂,

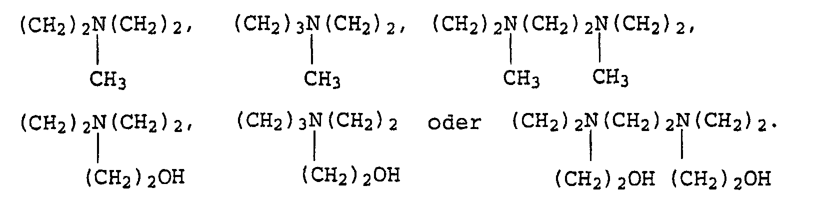

Das Äquivalent An⊖ eines Anions leitet sich z.B. von folgenden Anionen ab: Fluorid, Chlorid, Bromid, Iodid, Sulfat, Phosphat, Formiat, Acetat, Propionat, Mono-, Di- oder Trichloracetat, Lactat, Methoxyacetat, Citrat, Succinat, Methansulfonat, Benzolsulfonat, 2- oder 4-Methylbenzolsulfonat oder Naphthalinsulfonat.

Als Kupplungskomponenten KH sind Verbindungen aus der Benzol-, Naphthalin-, Chinolin-, Pyridon-, Barbitursäure- oder Pyrazolonreihe geeignet und entsprechen beispielsweise den Verbindungen der Formeln III a-f 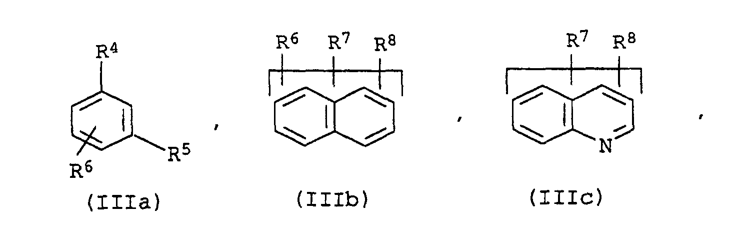 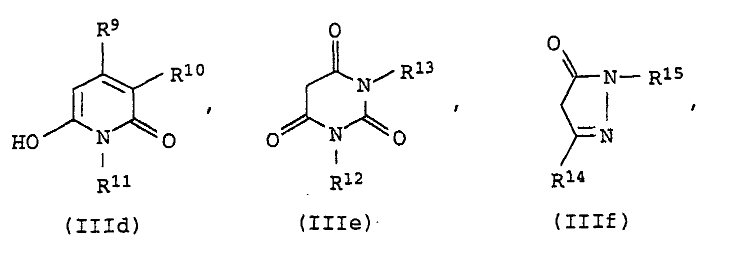 worin
- R⁴: Hydroxy, Amino, Morpholino, Mono- oder Di-(C₁-C₆) - alkylamino, deren Alkylreste gegebenenfalls mit Hydroxy, Amino, Cyano, C₁-C₆-Alkoxycarbonyl, Carbamoyl oder Mono- oder Di-(C₁-C₆)-alkylcarbamoyl substituiert sind und gegebenenfalls durch Oxy unterbrochen sind, oder C₁-C₆-Alkoxy,
- R⁵: Wasserstoff, C₁-C₆-Alkyl oder einen Rest R⁴,
- R⁶: Wasserstoff, C₁-C₆-Alkyl, C₁-C₆-Alkoxy, dessen Alkylrest gegebenenfalls durch Oxy unterbrochen ist, Mono- oder Di-(C₁-C₆)-alkylamino, C₁-C₆-Alkoxycarbonyl, Carbamoyl, Mono- oder Di-(C₁-C₆)-alkylcarbamoyl, deren Alkylreste gegebenenfalls mit Hydroxy oder Amino substituiert sind und gegebenenfalls durch Oxy unterbrochen sind, Sulfamoyl, Mono- oder Di-(C₁-C₆)-alkyl-sulfamoyl, deren Alkylreste gegebenenfalls mit Hydroxy oder Amino substituiert sind und gegebenenfalls durch Oxy unterbrochen sind, oder Carboxyl,
- R⁷: Hydroxy, Amino, Mono- oder Di-(C₁-C₁₂)-alkylamino, Cyclohexylamino,
- R⁸: Wasserstoff, Hydroxy, Amino, Formylamino, Acetylamino, C₁-C₆-Alkyl,
- R⁹: Wasserstoff, C₁-C₆-Alkyl, Phenyl, Hydroxyl, Cyano, Acetyl, Benzoyl, Methoxycarbonyl, Carbamoyl,
- R¹⁰: Wasserstoff, Chlor, Brom, Acetylamino, Amino, Nitro, Sulfamoyl, Methylsulfonyl, Phenylsulfonyl, C₁-C₄-Alkoxycarbonyl, C₁-C₄-Alkanoyl, Benzoyl, Carbamoyl, Cyano, N-Methylimidazolyl, Pyridinio,
- R¹¹: Wasserstoff, C₁-C₆-Alkyl, das durch Phenyl, Hydroxy, Amino, C₁-C₆-Alkoxyl, Acetylamino, Benzoylamino oder Cyano substituiert sein kann, Cyclohexyl, Phenyl, das durch Benzoylamino, Acetylamino, Methyl, Methoxy, Cyano oder Chlor substituiert sein kann, oder Amino, das durch Phenyl, C₁-C₆-Alkyl, C₁-C₆-Alkanoyl oder Benzoyl substituiert ist,
- R¹² oder R¹³: unabhängig voneinander Wasserstoff oder C₁-C₆-Alkyl bedeuten,
- R¹⁴: Methyl, C₁-C₄-Alkoxycarbonyl oder Phenyl,
- R¹⁵: Wasserstoff, C₁-C₆-Alkyl, Cyclohexyl, Benzyl oder Phenyl, das gegebenenfalls ein- bis dreifach mit Fluor, Chlor, Brom, C₁-C₄-Alkyl, C₁-C₄-Alkoxy, Cyano, Acetyl, Acetylamino, Hydroxy, Sulfamoyl oder Carbamoyl substituiert ist, bedeuten.

Reste R⁴, R⁶ und R⁷ sind z.B. Mono- oder Dimethylamino, Mono- oder Diethylamino, Mono- oder Dipropylamino, Mono- oder Diisopropylamino, Mono- oder Dibutylamino, Mono- oder Dipentylamino, Monooder Diisopentylamino, Mono- oder Dineopentylamino, Mono- oder Dihexylamino, Mono- oder Di-2-Methylpentylamino, N-Methyl-nbutylamino oder N-Ethyl-n-butylamino.

Reste R⁴ sind weiterhin z.B. Mono- oder Di-(2-hydroxyethyl)amino, Mono- oder Di-(2-hydroxypropyl)amino, Mono- oder Di-(3-hydroxypropyl)amino, N-Methyl-2-hydroxyethylamino, N-Methyl-2-hydroxypropylamino, N-Methyl-3-hydroxypropylamino, N-Ethyl-2-hydroxyethylamino, N-Ethyl-2-hydroxypropylamino, N-Ethyl-3-hydroxypropylamino, N-Propyl-2-hydroxyethylamino, N-Propyl-2-hydroxypropylamino, N-Propyl-3-hydroxypropylamino, N-Isopropyl-2-hydroxyethylamino, -2-hydroxypropylamino, -3-hydroxypropylamino, Mono- oder Di-(2-aminoethyl)amino, Mono- oder Di-(2-aminopropyl)amino, Mono- oder Di-(3-aminopropyl)amino, Mono- oder Di-(2-aminobutyl)amino, Mono- oder Di-(4-aminobutyl)amino, 2-Cyanoethylamino, 2-Cyano-2-methylethylamino, 2-Methoxycarbonylethylamino, 2-Methoxycarbonyl-2-methylethylamino, 2-Ethoxycarbonylethylamino, 2-Ethoxycarbonyl-2-methylethylamino, 2-Propoxycarbonylethylamino, 2-Propoxycarbonyl-2-methylethylamino, 2-Isopropoxycarbonylethylamino, 2-Isopropoxycarbonyl-2-methylethylamino, 2-Butoxycarbonylethylamino, 2-Butoxycarbonyl-2-methylethylamino, 2-Carbamoylethylamino, 2-Carbamoyl-2-methylethylamino, 2-Mono- oder Dimethylaminocarbonylethylamino, 2-Mono- oder Dimethylaminocarbonyl-2-methylethylamino, Monooder Di-(2-methoxyethyl)amino, Mono- oder Di-(2-methoxypropyl)amino, Mono- oder Di-(3-methoxypropyl)amino, oder Monooder Di-(2-hydroxyethyloxyethyl)amino.

Reste R⁵, R⁶, R⁸, R⁹, R¹¹, R¹², R¹³ und R¹⁵ sind z.B. Methyl, Ethyl, Propyl, Isopropyl, Butyl, Isobutyl, sec-Butyl, tert-Butyl, Pentyl, Isopentyl, Neopentyl, tert.-Pentyl, Hexyl oder 2-Methylpentyl.

Die Reste R¹¹ sind Hydroxy-C₁-C₄-alkyl wie Hydroxymethyl, 1-Hydroxyeth-1-yl, 2-Hydroxyeth-1-yl, 1-Hydroxy-prop-1-yl, 2-Hydroxyprop-1-yl, 3-Hydroxyprop-1-yl, 1-Hydroxy-prop-2-yl, 2-Hydroxyprop-2-yl, 1-Hydroxbut-1-yl, 2-Hydroxybut-1-yl, 3-Hydroxybut-1-yl, 4-Hydroxybut-1-yl, 1-Hydroxybut-2-yl, 2-Hydroxybut-2-yl, 1-Hydroxybut-3-yl, 2-Hydroxybut-3-yl, 1-Hydroxy-2-methyl-prop-3-yl, 2-Hydroxy-2-methyl-prop-3-yl, 3-Hydroxy-2-methyl-prop-3-yl, 2-Hydroxymethyl-prop-2-yl, Cyanomethyl, Cyanoethyl, Cyanopropyl oder Cyanobutyl.

Reste R¹¹ sind weiterhin z.B. Benzyl, 1-Phenylethyl, 2-Phenylethyl, 1-Phenylprop-1-yl, 2-Phenylprop-1-yl, 3-Phenylprop-1-yl, 1-Phenylbut-1-yl, 2-Phenylbut-1-yl, 3-Phenylbut-1-yl, 4-Phenylbut-1-yl, 1-Phenylbut-2-yl, 2-Phenylbut-2-yl, 3-Phenylbut-2-yl, 4-Phenylbut-2-yl, 1-(Phenylmethyl)-eth-1-yl, 1-(Phenylmethyl)-1-(methyl)-eth-1-yl, 1-(Phenylmethyl)-prop-1-yl, vorzugsweise Benzyl und 2-Phenylethyl, Methoxymethyl, Ethoxymethyl, n-Propoxymethyl, (1-Methylethoxy)methyl, n-Butoxymethyl, (1-Methylpropoxy)methyl, (2-Methylpropoxy)methyl, (1,1-Dimethylethoxy)-methyl, 2-(Methoxy)ethyl, 2-(Ethoxy)ethyl, 2-(n-Propoxy)-ethyl, 2-(1-Methoxyethoxy)ethyl, 2-(n-Butoxy)ethyl, 2-(1-Methylpropoxy)ethyl, 2-(2-Methylpropoxy)ethyl, 2-(1,1-Dimethylethoxy)ethyl, 2-(Methoxy)propyl, 2-(Ethoxy)propyl, 2-(n-Propoxy)propyl, 2-(1-Methylethoxy)propyl, 2-(n-Butoxy)propyl, 2-(1-Methylpropoxy)propyl, 2-(2-Methylpropoxy)propyl, 2-(1,1-Dimethylethoxy)propyl, 3-(Methoxy)propyl, 3-(Ethoxy)propyl, 3-(n-Propoxy)propyl, 3-(1-Methylethoxy)propyl, 3-(n-Butoxy)-propyl, 3-(1-Methylpropoxy)propyl, 3-(2-Methylpropoxy)-propyl, 3-(1,1-Dimethylethoxy)propyl, 2-(Methoxy)butyl, 2-(Ethoxy)butyl, 2-(n-Propoxy)butyl, 2-(1-Methylethoxy)butyl, 2-(n-Butoxy)butyl, 2-(1-Methylpropoxy)butyl, 2-(2-Methylpropoxy)butyl, 2-(1,1-Dimethylethoxy)butyl, 3-(Methoxy)butyl, 3-(Ethoxy)butyl, 3-(n-Propoxy)butyl, 3-(1-Methylethoxy)butyl, 3-(n-Butoxy)butyl, 3-(1-Methylpropoxy)butyl, 3-(2-Methylpropoxy)butyl, 3-(1,1-Dimethylethoxy)butyl, 4-(Methoxy)butyl, 4-(Ethoxy)butyl, 4-(n-Propoxy)butyl, 4-(1-Methylethoxy)butyl, 4-(n-Butoxy)butyl, 4-(1-Methylpropoxy)butyl, 4-(2-Methylpropoxy)butyl oder 4-(1,1-Dimethylethoxy)butyl.

Reste R¹⁰ sind z.B. Formyl, Acetyl, Propionyl, Butyryl oder Isobutyryl.

Die Reste R⁶ sind beispielsweise Mono- oder Dimethylcarbamoyl, Mono- oder Diethylcarbamoyl, Mono- oder Dipropylcarbamoyl, Monooder Dibutylcarbamoyl, Mono- oder Dipentylcarbamoyl oder Monooder Dihexylcarbamoyl.

Reste R⁴ und R⁶ können z.B. Methoxy, Ethoxy, Propoxy, Isopropoxy, Butoxy, sec-Butoxy, Isobutoxy oder tert-Butoxy sein.

Reste R⁶ sind weiterhin z.B. Methoxyethyloxy, Methoxypropyloxy, Ethoxyethyloxy, Ethoxypropyloxy oder Propoxypropyloxy.

Reste R¹⁵ sind z.B. 2-, 3- oder 4-Fluorphenyl, 2-, 3- oder 4-Chlorphenyl, 2-, 3- oder 4-Bromphenyl, 2-, 3- oder 4-Methylphenyl, 2-, 3- oder 4-Ethylphenyl, 2-, 3- oder 4-Methoxyphenyl, 2-, 3- oder 4-Cyanophenyl, 2-, 3- oder 4-Hydroxyphenyl, 2-, 3-oder 4-Acetylphenyl, 2-, 3- oder 4-Acetylaminophenyl, 2-, 3-oder 4-Sulfamoylphenyl oder 2-, 3- oder 4-Carbamoylphenyl.

Die Reste R⁶, R¹⁰ und R¹⁴ sind ferner z.B. Methoxycarbonyl, Ethoxycarbonyl, Propoxycarbonyl, Isopropoxycarbonyl, Butoxycarbonyl, Isobutoxycarbonyl, sec-Butoxycarbonyl, tert-Butoxycarbonyl, Pentoxycarbonyl, Isopentoxycarbonyl, Neopentoxycarbonyl, tert.-Pentyloxycarbonyl, Hexyloxycarbonyl oder 2-Methylpentyloxycarbonyl.

Die Reste R⁶ sind weiterhin beispielsweise Mono- oder Dimethylsulfamoyl, Mono- oder Diethylsulfamoyl, Mono- oder Dipropylsulfamoyl, Mono- oder Dibutylsulfamoyl.

Als Reste R¹¹ kommen ferner in Betracht z.B. Aminomethyl, 2-Aminoethyl, 2- oder 3-Aminopropyl, 2- oder 4-Aminobutyl, Acetylaminomethyl, 2-Acetylaminoethyl, 2- oder 3-Acetylaminopropyl, 2- oder 4-Acetylaminobutyl, Benzoylaminomethyl, 2-Benzoylaminoethyl, 2-oder 3-Benzoylaminopropyl, 2- oder 4-Benzoylaminobutyl, 2-, 3-oder 4-Benzoylaminophenyl, 2-, 3- oder 4-Acetylaminophenyl, 2-, 3- oder 4-Methylphenyl, 2-, 3- oder 4-Methoxyphenyl, 2-, 3- oder 4-Cyanophenyl, 2-, 3- oder 4-Chlorphenyl, Phenylamino, Methylamino, Ethylamino, Propylamino, Isopropylamino, Butylamino, Isobutylamino, sec-Butylamino, tert-Butylamino, Acetylamino, Propionylamino, Butyrylamino, Isobutyrylamino, Isobutyrylamino, Valerylamino, Isovalerylamino, Pivaloylamino, Pentylcarbonylamino, oder Benzoylamino.

Im folgenden werden beispielhaft Kupplungskomponenten KH aufgeführt. Als Kupplungskomponenten der Benzolreihe sind z.B. Resorcin, 2- und 4-Methylresorcin, 1,3-Phenylendiamin, 3-Aminophenol, 4-Methyl-3-aminophenol, 5-Amino-2-methylphenol, 4-Ethyl-3-aminophenol, 3-N,N-Diethylaminophenol, 2,4-Diaminotoluol, 2,4-Dihydroxybenzoesäure, 4-Methyl-2-aminophenol, 3-Acetaminophenol, 3-Amino-4-hydroxybenzolsulfonamid, o-, m- oder p-Toluidin, o-, m- oder p-Xylidin, 2,5-Dimethoxyanilin, 2-Methoxy-5-methylanilin, 3-Amino-4-methylacetanilid, 2- oder 4-Methoxyacetanilid, N-Methylanilin, N-Methyl-m-toluidin, N-Ethylanilin, N,N-Diethylanilin, N-Ethyl-m-toluidin, N-(2-Hydroxyethyl)anilin, N,N-Dihydroxyethylanilin oder N-(2-Hydroxyethyl)-m-toluidin zu nennen.

Kupplungskomponenten der Naphthalinreihe sind z.B. 1-Naphthylamin, N-Phenyl-1-naphthylamin, N-Ethyl-1-naphthylamin, N-Ethyl-2-naphthylamin, N-Phenyl-2-naphthylamin, 1-Naphthol, 2-Naphthol, 2,5-Dihydroxynaphthalin, 1,6-Dihydroxynaphthalin, 1,7-Dihydroxynaphthalin, 2,7-Dihydroxynaphthalin, 2-Hydroxynaphthalin-1-carbonsäure, 2-Hydroxynaphthalin-3-carbonsäure, 2-Hydroxynaphthalin-3-carbonsäuremethylester oder 2-Hydroxynaphthalin-3-carbonsäureamid.

Kupplungskomponenten der Chinolinreihe sind z.B. 8-Hydroxychinolin, 8-Hydroxy-2-methylchinolin, 8-Aminochinolin, 8-Amino-2-methylchinolin, 2-Hydroxychinolin und 2,4-Dihydroxychinolin.

Als Pyridonkupplungskomponenten sind beispielsweise 1-Ethyl-2-hydroxy-4-methyl-5-carbamoylpyrid-6-on, 1-(2'-Hydroxyethyl)-2-hydroxy-4-methyl-5-carbamoylpyrid-6-on, 1-Phenyl-2-hydroxy-4-methyl-5-carbamolpyrid-6-on, 1-Ethyl-2-hydroxy-4-methyl-5-cyanopyrid-6-on, 1-Methyl-2-hydroxy-4-methyl-5-cyanopyrid-6-on, 1-Methyl-2-hydroxy-5-acetylpyrid-6-on, 1,4-Dimethyl-2-hydroxy-5-cyanopyrid-6-on, 1,4-Dimethyl-5-carbamoylpyrid-6-on, 2,6-Dihydroxy-4-ethyl-5-cyanopyridin, 2-Hydroxy-4-ethyl-5-carbamoylpyrid-6-on oder 1-Methyl-2-hydroxy-4-methylsulfonylpyrid-6-on zu nennen.

Als Kupplungskomponente der Barbitursäurereihe sind z.B. Barbitursäure, Dimethylbarbitursäure und Diethylbarbitursäure geeignet.

Als Pyrazolon-Kupplungskomponenten sind beispielsweise 3-Methyloder 3-(C₁-C₄-Alkoxycarbonyl)pyrazol-5-one zu nennen, die in 1-Stellung Wasserstoff, gegebenenfalls durch Methyl, Ethyl, Fluor, Chlor, Brom, Methoxy, Ethoxy, Cyano, Acetylamino, Hydroxyl, Carbamoyl oder Sulfamoyl substituiertes Phenyl tragen können. Beispielhaft seien 1-(2',5,-Dichlorphenyl)-3-methylpyrazol-5-on, 1-Phenylpyrazol-5-on-3-carbonsäureethylester und Pyrazol-5-on-3-carbonsäureethylester erwähnt.

Bevorzugt werden Farbstoffe der allgemeinen Formel I, in der R¹ und R² Wasserstoff bedeutet.

Weiterhin werden Farbstoffe bevorzugt, in denen A¹ und A² sowie B¹ und B² jeweils denselben Rest bedeuten.

Bevorzugte Reste B¹ und B² sind C₂-C₆-Alkylen, das durch Oxy oder C₁-C₆-Alkylimino unterbrochen sein kann. Dabei sind die Reste B¹ und B² bevorzugt gleich.

Als Kupplungskomponenten KH werden Verbindungen der Formel IIIa und IIIb bevorzugt. Bevorzugt werden insbesondere Farbstoffe der allgemeinen Formel IV 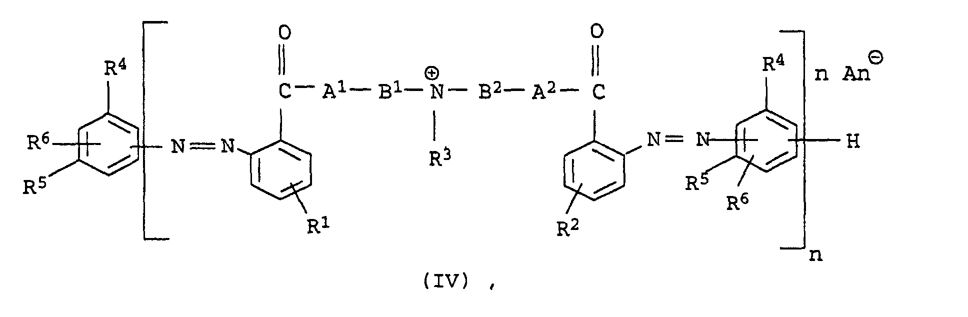 in der n für eine Zahl von 1 bis 8 und R¹, R², R³, R⁴, R⁵, R⁶, A¹, A², B¹, B² und An⊖ die oben genannte Bedeutung haben. Besonders bevorzugt werden Kupplungskomponenten der Formel IIIa, in der R⁴ für Hydroxy, Amino, Mono- oder Dimethyl- oder -ethylamino oder Mono- oder Dihydroxyethylamino steht und R⁵ und R⁶ unabhängig voneinander für Wasserstoff, Hydroxy, Amino oder Methyl stehen.

Ebenfalls besonders bevorzugt werden Kupplungskomponenten der Formel IIIb, in der R⁷ Hydroxy oder Amino bedeutet.

Besonders bevorzugt werden die folgenden Kupplungskomponenten: Resorcin, 3-Aminophenol, m-Phenylendiamin, α- und β-Naphthol, m-Toluidin und 2,5-Dimethylanilin.

Ferner werden Farbstoffe der Formel I bevorzugt, in der n die Zahl 1 bedeutet.

Zur Herstellung der Farbstoffe der Formel I kann man ein Amin der Formel V 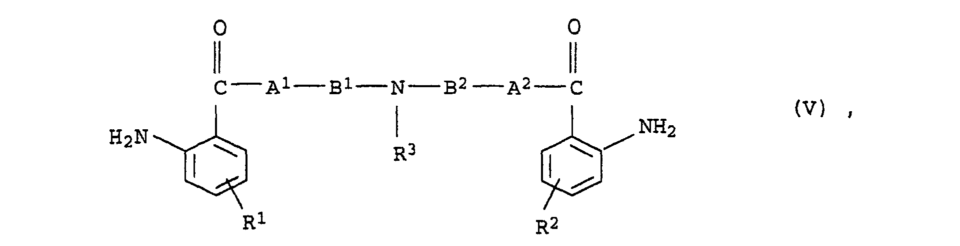 in der R¹, R², R³, A¹, A², B¹ und B², die oben angegebene Bedeutung haben, nach bekannten Methoden diazotieren und mit einer Kupplungskomponente KH kuppeln. Bevorzugt wählt man einen pH-Wert im Bereich von 2 bis 8.

Vorteilhaft dosiert man die Diazoniumsalzlösung zur Lösung der Kupplungskomponente. Es ist generell möglich, eine einzelne Kupplungskomponente sowie Gemische mehrerer Kupplungskomponenten zu verwenden, z.B. um den Farbton abzutönen.

Durch Wahl von Kupplungskomponenten, die zweifach kuppeln können, ist es möglich durch die Azokupplungsreaktion höhermolekulare Farbstoffe zu erhalten. Diese oligomeren Farbstoffe sind erhältlich durch Azokupplung von 1 Moläquivalent Diamin der Formel V auf 1 bis 2, vorzugsweise auf 1 bis 1,5 insbesondere 1 bis 1,2 Moläquivalente einer Kupplungskomponente der Formel IIIa' 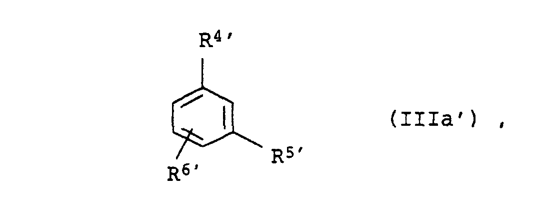 in der
- R^{4'} und R^{5'}: unabhängig voneinander Hydroxy, Amino, Morpholino oder Mono- oder Di-(C₁-C₆)-alkylamino, deren Alkylreste gegebenenfalls mit Hydroxy, Amino, Cyano, C₁-C₆-Alkoxy-carbonyl, Carbamoyl oder Mono- oder Di-(C₁-C₆)-alkyl-carbamoyl substituiert sind und gegebenenfalls durch Oxy unterbrochen sind und
- R^{6'}: Wasserstoff, C₁-C₆-Alkoxy, dessen Alkylrest gegebenenfalls durch Oxy unterbrochen ist, Mono- oder Di-(C₁-C₆)-alkylamino, C₁-C₆-Alkoxycarbonyl, Carbamoyl, Mono- oder Di-(C₁-C₆)-alkylcarbamoyl, Sulfamoyl, Mono- oder Di-(C₁-C₆)-alkylsulfamoyl bedeuten.

Der Kupplungsschritt wird bei einem pH-Wert oberhalb 2, bevorzugt in einem Bereich von 3 bis 7 durchgeführt. Die Einstellung des gewünschten pH-Werts sowie gegebenenfalls eine Korrektur während der Kupplungsreaktion kann beispielsweise durch Zugabe von Ammonium- oder Alkalimetallbasen, z.B. Natrium- oder Kaliumhydroxyd, -carbonat oder -acetat erfolgen. Üblicherweise ist der Endpunkt der Reaktion nach spätestens 2 Stunden nach beendeter Zugabe erreicht. Der Kettenabbruch erfolgt durch Kupplung auf eine Kupplungskomponente, die kein reaktionsfähiges Ende mehr besitzt, oder durch Zersetzung der Diazoniumverbindungen.

Je nach gewähltem Verhältnis der Einsatzstoffe erhält man Mischungen verschiedener Oligomere, wobei der Dimeranteil mit größer werdendem Anteil an Kupplungskomponente zunimmt. Durch ungefähr stöchiometrische Umsetzung von 1 Mol Diamin V mit 2 Mol Kupplungskomponente IIIa' erhält man überwiegend die bevorzugten Farbstoffe mit n gleich 1. Eine Auftrennung in die einzelnen Farbstoffe ist zwar im Prinzip möglich, in der Regel jedoch unnötig, da die Mischungen gute anwendungstechnische Eigenschaften zeigen.

Indem man auf Disazofarbstoffe IV eine Diazokomponente, die durch diazotieren eines Amins der Formel VI 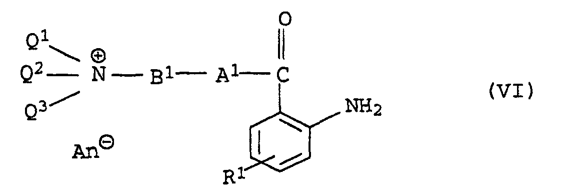 erhalten wird, kuppelt, gelangt man zu ebenfalls bevorzugten Tetraazofarbstoffen.

Die Amine VI sind allgemein bekannt und beispielsweise in der EP-A-0 159 549 beschrieben.

Die Farbstoffe können vorzugsweise bei der Herstellung von in der Masse gefärbtem, geleimten und ungeleimtem Papier verwendet werden. Sie können ebenfalls zum Färben von Papier nach dem Tauchverfahren angewendet werden.

Das Färben von Papier, Leder oder Cellulose erfolgt nach an sich bekannten Methoden.

Die neuen Farbstoffe oder ihre Präparationen färben das Abwasser bei der Papierherstellung praktisch gar nicht oder nur wenig an, was für die Reinhaltung der Gewässer besonders günstig ist. Sie sind hoch substantiv, melieren nicht, wenn sie auf Papier gefärbt sind und sind weitgehend pH-unempfindlich. Die Färbungen auf Papier zeichnen sich durch eine gute Lichtechtheit aus. Nach längerem Belichten ändert sich die Nuance Ton-in-Ton.

Die erfindungsgemäßen basischen Azofarbstoffe der Formel I können für sich alleine, in Gemischen untereinander und zusammen mit anderen kationischen oder anionischen Verbindungen in Form ihrer Lösungen oder in Form von Pulvern oder Granulaten angewendet werden. Sie eignen sich vorteilhaft zum Färben oder Bedrucken von polymeren Material, insbesondere von Papierstoffen wie Papier und Karton, aber auch von Cellulose, Baumwolle, Leder, Bastfasern, Hanf, Flachs, Sisal, Jute, Kokos, Stroh oder anionisch modifizierten Fasern sowie in Tinten oder Druckfarben.

Bei der Herstellung von Farbstoffpräparationen, enthaltend die neuen Farbstoffe der Formel I, ist die Anwendung von Polymeren, wie Polyacrylsäuren, Polyacrylsäurederivaten, Polyvinylaminen, Polyvinylamiden, Polyvinylacetaten, Polyvinylalkoholen, Polyvinylpyrrolidonen, Polysiloxanen oder Copolymeren der jeweiligen Monmeren hervorzuheben. Desgleichen können Oligomere des Ethylenimins, Ethylenoxids oder Propylenoxids oder Derivate dieser Oligomeren zur Anwendung kommen.

Die gefärbten Papiere, die eine gute Bleichbarkeit aufweisen, sind naßecht, nicht nur gegen Wasser, sondern ebenfalls gegen Milch, Seifenwasser, Natriumchloridlösungen, Fruchtsäfte oder gesüßtem Mineralwasser und wegen ihrer guten Alkoholechtheit auch gegen alkoholische Getränke beständig.

Mit den neuen Farbstoffen kann man auch Polyacrylnitriltextilien oder durch anionische Gruppen modifizierte Polyamid- oder Polyestertextilien färben, foulardieren oder bedrucken.

Die folgenden Beispiele sollen die Erfindung näher erläutern.

### Beispiel 1

a) 119 g N-Methyldiethanolamin wurden in 215 ml Aceton gelöst und bei 50°C innerhalb von 30 Minuten in eine Suspension von 326 g Isatosäureanhydrid in 1000 ml Aceton getropft. Anschließend wurde die Mischung noch 5 Stunden unter Rückfluß erhitzt und dann das Lösungsmittel im Vakuum entfernt. Man erhielt 364 g eines zähflüssigen Öls (Rohprodukt), das zur Reinigung aus Ethanol umkristallisiert wurde. Ausbeute: 256 g weiße Kristalle, Schmp.: 68-69°C
b) 3,6 g des unter 1a) hergestellten Diamins wurden in eine Mischung aus 50 ml Eiswasser und 6 ml konz. Salzsäure eingetragen. Anschließend wurden bei 0 - 5°C 6,6 ml einer 23 gew.-%igen Natriumnitritlösung zugetropft. Danach rührte man noch eine Stunde bei 0 - 5°C nach und vernichtete dann überschüssiges Nitrit durch Zugabe von Amidosulfonsäure. Die Diazoniumsalzlösung wurde zu einer Lösung von 2,2 g Resorcin in 200 ml Wasser getropft. Hierbei wurde durch Zugabe von 10 gew.-%iger Natronlauge ein pH-Wert von 2 eingestellt, wobei die Temperatur durch Eiszugabe bei 0-5°C gehalten wurde. Nach beendeter Zugabe rührte man noch 3 Stunden bei Raumtemperatur und pH 2 nach und stellte dann den pH-Wert mit 10 gew.-%iger Natronlauge auf pH 7 ein. Dann ließ man über Nacht auf Raumtemperatur erwärmen, saugte den entstandenen orangeroten Niederschlag ab, wusch ihn mit Wasser und trocknet ihn bei 60°C im Vakuum. Man erhielt 5,7 g des Farbstoffes der Formel 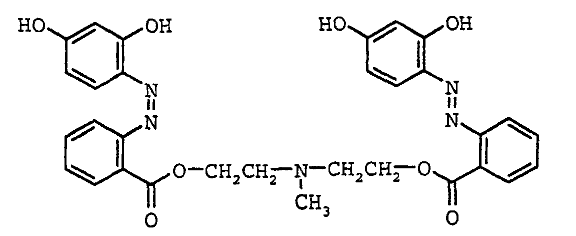 λₘₐₓ (verd. Essigsäure): 408 nm

Analog zu Beispiel 1 wurden mit dem unter 1a) beschriebenen Diamin und den in Tabelle 1 aufgeführten Kupplungskomponenten die in der Tabelle angegebenen Farbstoffe hergestellt.

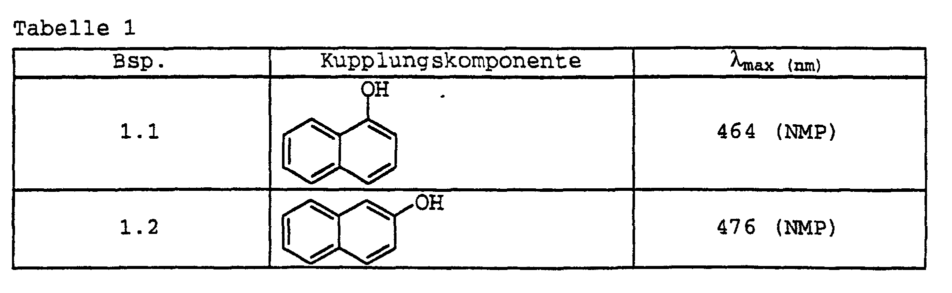

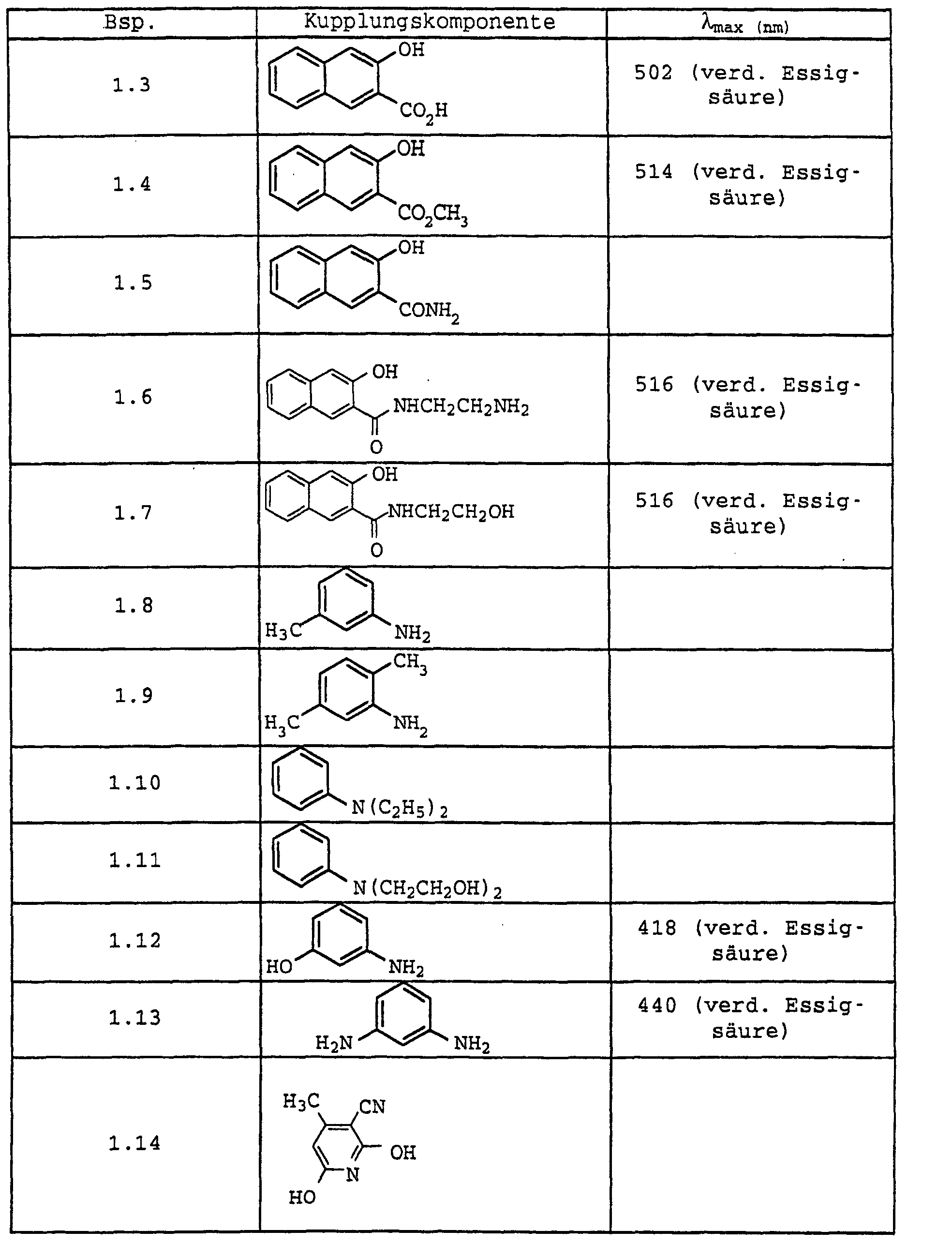

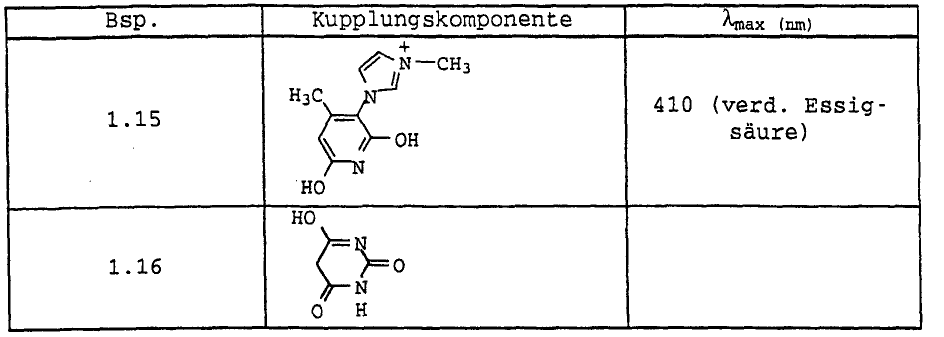

### Beispiel 2

2,1 g 2-Amino-(2-dimethylamino-ethyl)-benzoat wurden in eine Mischung aus 20 ml Eiswasser und 3 ml konz. Salzsäure eingetragen und dann bei 0 - 5°C 3,3 ml 23 gew.-%ige Natriumnitritlösung zugetropft. Anschließend rührte man noch eine Stunde bei 0 - 5°C nach und vernichtete dann überschüssiges Nitrit durch Zugabe von Amidosulfonsäure. Die Diazoniumsalzlösung wurde zu einer Lösung von 3 g Farbstoff des Beispiels 1b in 50 ml Eiswasser und 20 ml Eisessig gegeben, wobei der pH-Wert mit 10 gew.-%iger Natronlauge bei pH 5 - 6 gehalten wurde. Nach beendeter Zugabe ließ man die Reaktionsmischung über Nacht auf Raumtemperatur erwärmen und stellt dann den pH-Wert auf pH 7 ein. Nach einstündigem Rühren saugte man den braunen Niederschlag ab, wusch ihn mit Wasser und trocknete ihn bei 60°C im Vakuum.
Man erhielt 5,0 g des Farbstoffes der Formel 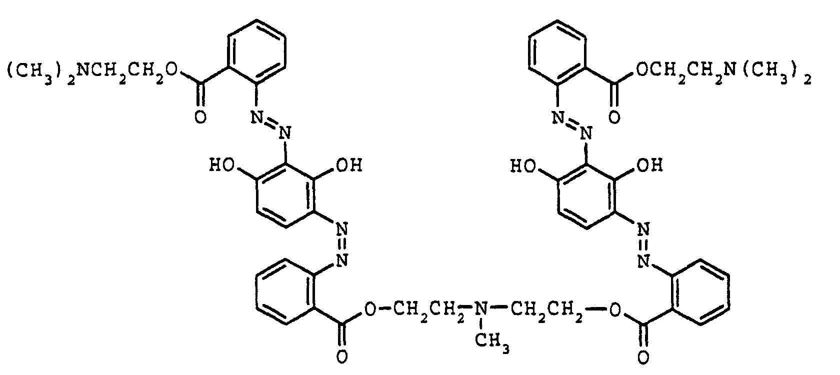 λₘₐₓ (verd. Essigsäure): 410 nm

Analog zu Beispiel 2 können auch die Farbstoffe der Beispiele 1.12 und 1.13 mit diazotiertem 2-Amino-(2-dimethylamino-ethyl)-benzoat umgesetzt werden.

### Beispiel 3

3,6 g des unter 1a) hergestellten Diamins wurden in eine Mischung aus 50 ml Eiswasser und 6 ml konz. Salzsäure eingetragen und dann bei 0 - 5°C 6,6 ml Natriumnitritlösung (23%ig) zugetropft. Anschließend rührte man noch eine Stunde bei 0 - 5°C nach und vernichtete dann überschüssiges Nitrit durch Zugabe von Amidosulfonsäure. Die Diazoniumsalzlösung wurde dann zu einer Lösung von 1,1 g Resorcin in 100 ml Wasser getropft. Hierbei wurde durch gleichzeitige Zugabe von 10 gew.-%iger Natronlauge ein pH-Wert von 10 eingestellt, wobei die Temperatur durch Eiszugabe bei 0-5°C gehalten wurde. Nach beendeter Zugabe rührte man noch 10 Minuten bei 0-5°C und pH 10 nach und stellte dann den pH-Wert mit konz. Salzsäure auf pH 7 ein. Man ließ die Mischung über Nacht auf Raumtemperatur erwärmen, saugte den entstandenen orangeroten Niederschlag ab, wusch ihn mit Wasser und trocknete ihn bei 60°C im Vakuum.
Man erhielt 4,8 g eines oligomeren Farbstoffes mit der Wiederholungseinheit 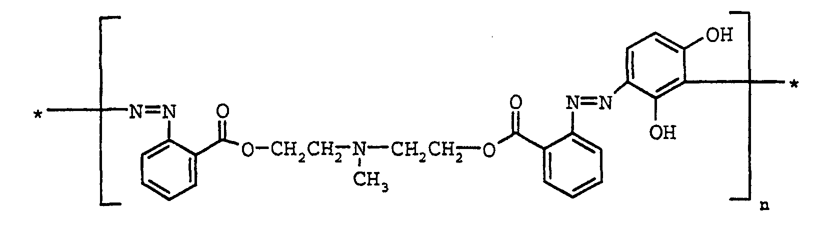 λₘₐₓ (verd. Essigsäure): 412 nm

## Patentansprüche

1. Kationische Azofarbstoffe der allgemeinen Formel I 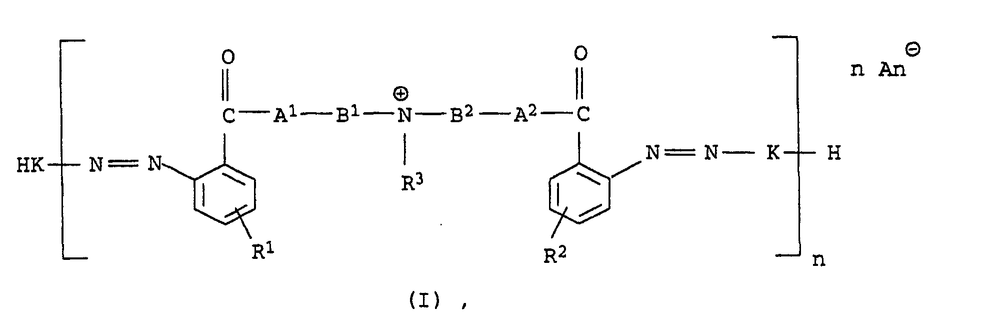 in der
R¹ und R² unabhängig voneinander Wasserstoff, Nitro, Halogen, C₁-C₆-Alkyl,
R³ Wasserstoff, C₁-C₆-Alkyl, das durch 1 oder 2 nicht benachbarte Oxy-, Imino, C₁-C₆-Alkylimino-gruppen oder einen Rest 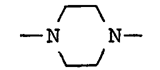 unterbrochen sein kann,
A¹ und A² unabhängig voneinander Oxy, Imino oder gegebenenfalls substituiertes C₁-C₆-Alkylimino,
B¹ und B² unabhängig voneinander C₁-C₆-Alkylen, das durch 1 oder 2 nichtbenachbarte Oxy-, Imino-, gegebenen- falls substituierte C₁-C₆-Alkyliminogruppen oder einen Rest 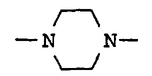 unterbrochen sein kann,
An⊖ das Äquivalent eines Anions,
n die Zahl 1 und
K den Rest einer Kupplungskomponente oder den Rest eines Monoazofarbstoffs der Formel 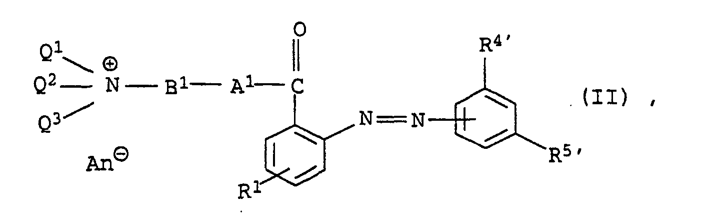
in der
R^{4'} und R^{5'} unabhängig voneinander Hydroxy, Amino, Morpholino oder Mono- oder Di-(C₁-C₆)-alkylamino, deren Alkylreste gegebenenfalls mit Hydroxy, Amino, Cyano, C₁-C₆-Alkoxycarbonyl, Carbamoyl oder Mono- oder Di-(C₁-C₆)-alkylcarbamoyl substituiert sind und gegebenenfalls durch Oxy unterbrochen sind und
Q¹, Q² und Q³ unabhängig voneinander Wasserstoff, C₁-C₁₀-Alkyl, das durch 1 bis 4 nichtbenachbarte Oxy-, Imino- und gegebenenfalls substituierte C₁-C₄-Alkyl-iminogruppen unterbrochen sein kann und das mit Hydroxy, Halogen oder Phenyl substituiert sein kann und Q¹ und Q² zusammen mit dem sie verbindenden Stickstoffatom einen 5- oder 6-gliedrigen heterocyclischen Rest, der gegebenenfalls Stickstoff oder Sauerstoff als weiteres Hereoatom aufweist, bedeuten
und zusätzlich n eine Zahl von 2 bis 8 wenn K für den Rest einer Kupplungskomponente der Formel IIIa' 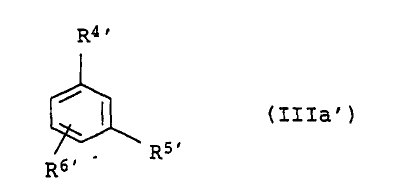 steht, in der
R^{6'} Wasserstoff, C₁-C₆-Alkoxy, dessen Alkylrest gegebenenfalls durch Oxy unterbrochen ist, Mono- oder Di-(C₁-C₆)-alkylamino, C₁-C₆-Alkoxycarbonyl, Carbamoyl, Mono- oder Di-(C₁-C₆)-alkylcarbamoyl, Sulfamoyl, Mono- oder Di-(C₁-C₆)-alkylsulfamoyl
bedeuten.

2. Kationische Azofarbstoffe nach Anspruch 1, in denen n die Zahl 1 bedeutet.

3. Kationische Azofarbstoffe nach Anspruch 1 oder 2 der allgemeinen Formel IV 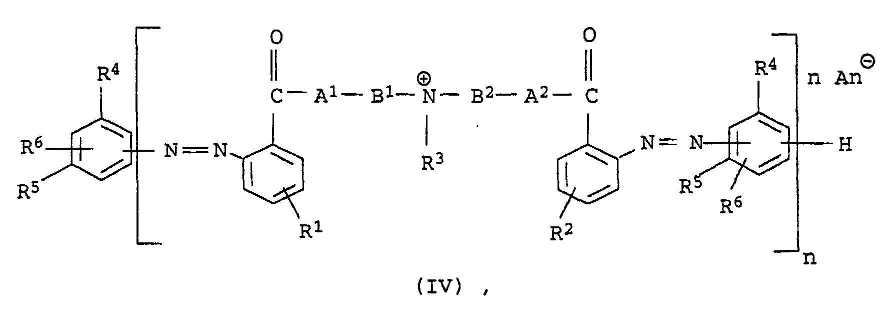 in der n für eine Zahl von 1 bis 8 und R¹, R², R³, R⁴, R⁵, R⁶ A¹, A², B¹, R² und An⊖ die in Anspruch 1 genannte Bedeutung haben.

4. Kationische Azofarbstoffe nach den Ansprüchen 1 bis 3, in denen A¹ und A² sowie B¹ und B² jeweils denselben Rest bedeuten.

5. Kationische Azofarbstoffe nach den Ansprüchen 1, 3 oder 4, erhältlich durch Azokupplung von 1 Moläquivalent Diamin der Formel V 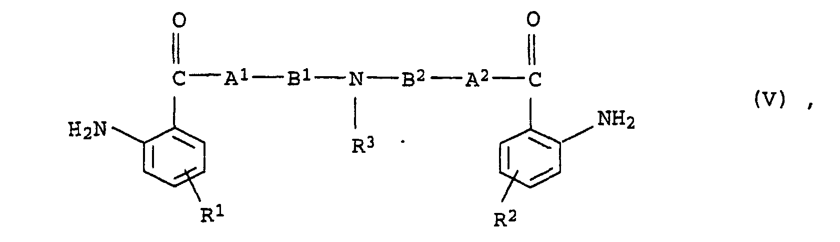 in der R¹, R², R³, A¹, A², B¹ und B² die in Anspruch 1 genannte Bedeutung haben, mit 1 bis 2 Moläquivalenten einer Kupplungskomponente der Formel IIIa' 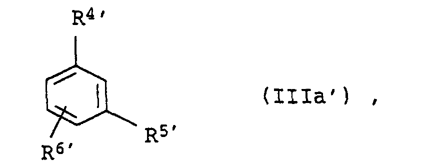 in der R^{4'}, R^{5'} und R^{6'} die in Anspruch 1 genannte Bedeutung haben.

6. Kationische Azofarbstoffe nach den Ansprüchen 1 oder 3 bis 5, erhältlich durch Azokupplung von 1 Moläquivalent Diamin V mit 1,5 bis 2 Moläquivalenten einer Kupplungskomponente IIIa'.

7. Verfahren zur Herstellung kationischer Azofarbstoffe gemäß den Ansprüchen 5 oder 6, indem ein oder mehrere Diamine V diazotiert und auf ein oder mehrere Kupplungskomponenten IIIa' gekuppelt werden.

8. Farbstoffmischungen enthaltend mehrere Farbstoffe der Formel I gemäß den Ansprüchen 1 oder 3 bis 6, die sich in ihrer Anzahl an Wiederholungseinheiten unterscheiden.

9. Verwendung der kationischen Azofarbstoffe gemäß Anspruch 1 zum Färben oder Bedrucken von polymerem Material.

## Claims

1. Cationic azo dyes of the general formula I 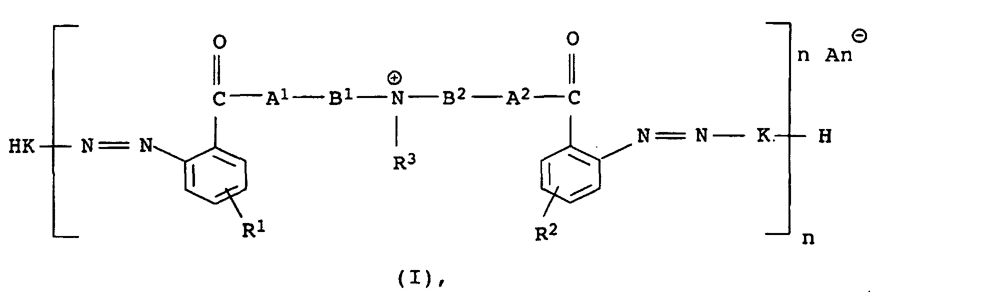 where
R¹ and R² are independently hydrogen, nitro, halogen, C₁-C₆-alkyl,
R³ is hydrogen, C₁-C₆-alkyl with or without interruption by 1 or 2 nonadjacent oxy, imino, C₁-C₆-alkylimino groups or by a 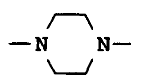 radical,
A¹ and A² are independently oxy, imino or substituted or unsubstituted C₁-C₆-alkylimino,
B¹ and B² are independently C₁-C₆-alkylene with or without interruption by 1 or 2 nonadjacent oxy, imino, substituted or unsubstituted C₁-C₆-alkylimino groups or by a 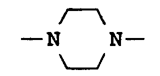 radical,
An⊖ is the equivalent of an anion,
n is 1, and
K is the radical of a coupling component or the radical of a monoazo dye of the formula 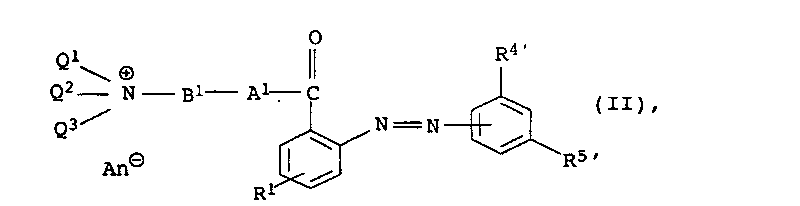
where
R^{4'} and R^{5'} are independently hydroxyl, amino, morpholino or mono- or di(C₁-C₆)alkylamino, whose alkyl radicals are unsubstituted or substituted by hydroxyl, amino, cyano, C₁-C₆-alkoxycarbonyl, carbamoyl or mono- or di(C₁-C₆)alkylcarbamoyl and uninterrupted or interrupted by oxy, and
Q¹, Q² and Q³ are independently hydrogen, C₁-C₁₀-alkyl with or without interruption by from 1 to 4 nonadjacent oxy, imino and substituted or unsubstituted C₁-C₄-alkylimino groups and with or without hydroxyl, halogen or phenyl substitution, or Q¹ and Q² combine with the linking nitrogen atom to form a 5- or 6-membered heterocyclic radical which optionally contains nitrogen or oxygen as further hetero atom,
and additionally n is from 2 to 8 when K is the radical of a coupling component of the formula IIIa' 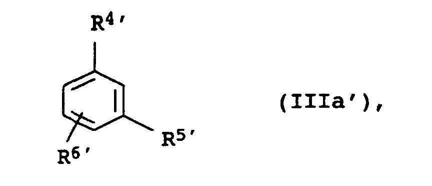 where
R^{6'} is hydrogen, C₁-C₆-alkoxy with or without oxy interruption in its alkyl radical, mono- or di(C₁-C₆)alkylamino, C₁-C₆-alkoxycarbonyl, carbamoyl, mono- or di(C₁-C₆)alkylcarbamoyl, sulfamoyl, mono- or di(C₁-C₆)alkylsulfamoyl.

2. Cationic azo dyes as claimed in claim 1, wherein n is 1.

3. Cationic azo dyes as claimed in claim 1 or 2 of the general formula IV 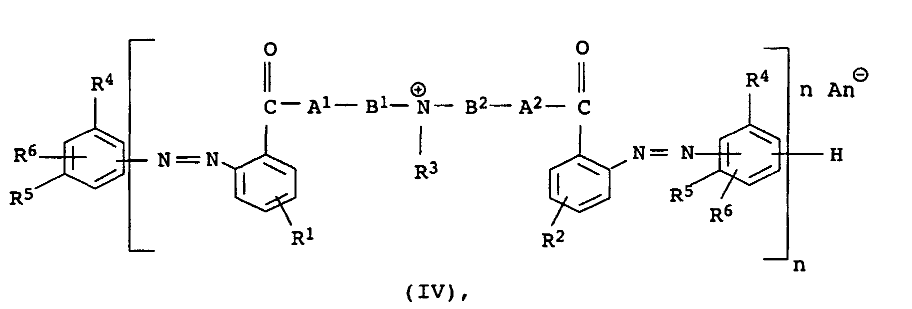 where n is from 1 to 8 and R¹, R², R³, R⁴, R⁵, R⁶, A¹, A², B¹, R² and An⊖ are each as defined in claim 1.

4. Cationic azo dyes as claimed in any of claims 1 to 3, wherein A¹ and A² on the one hand and B¹ and B² on the other are each the same radical.

5. Cationic azo dyes as claimed in any of claims 1, 3 or 4, obtainable by azo coupling of 1 mol equivalent of diamine of the formula V 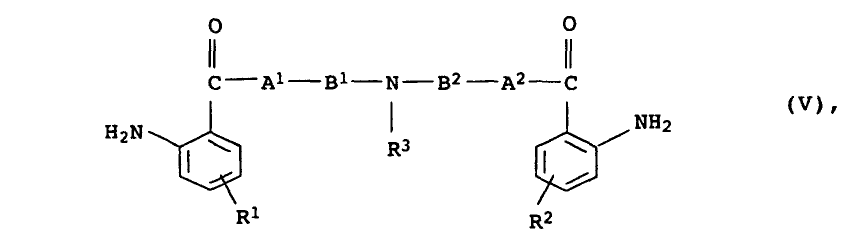 where R¹, R², R³, A¹, A², B¹ and B² are each as defined in claim 1, with from 1 to 2 mol equivalents of a coupling component of the formula IIIa' 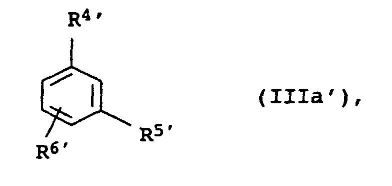 where R^{4'}, R^{5'} and R^{6'} are each as defined in claim 1.

6. Cationic azo dyes as claimed in any of claims 1 or 3 to 5, obtainable by azo coupling of 1 mol equivalent of diamine V with from 1.5 to 2 mol equivalents of a coupling component IIIa'.

7. A process for preparing cationic azo dyes as claimed in either of claims 5 and 6, which comprises diazotizing one or more diamines V and coupling the diazonium salts onto one or more coupling components IIIa'.

8. Dye mixtures comprising a plurality of dyes of the formula I as set forth in any of claims 1 or 3 to 6, which differ in their number of repeat units.

9. The method of using the cationic azo dyes of claim 1 for dyeing or printing polymeric material.

## Revendications

1. Colorants azoïques cationiques de la formule générale : 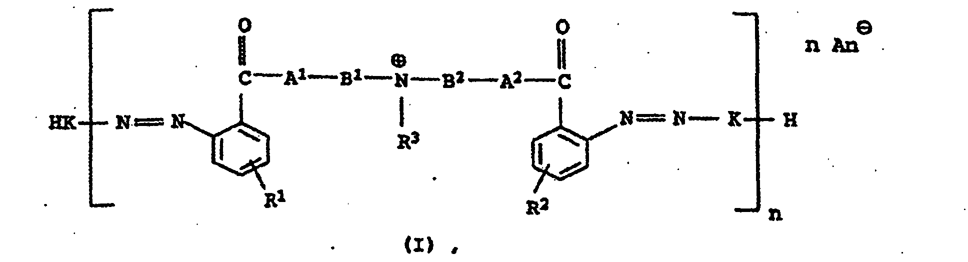 dans laquelle
R1 et R2 signifient, indépendamment l'un de l'autre, hydrogène, nitro, halogène, alkyle en C1-C6,
R3 hydrogène, alkyle en C1-C6, qui peut être interrompu par 1 ou 2 groupes adjacents oxy, imino, alkylimino en C1-C6 ou par un reste, 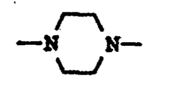
A1 et A2 indépendamment l'un de l'autre, oxy, imino ou éventuellement alkylimino en C1-C6 substitué,
B1 et B2 indépendamment l'un de l'autre, alkyle en C1-C6, qui peut être interrompu par 1 ou 2 groupes non adjacents
oxy, imino, éventuellement alkylimino en C1-C6 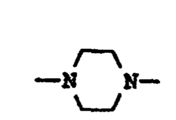
substitué, ou par un reste
An⊖ l'équivalent d'un anion,
n le nombre 1 et
K le reste d'un composant de copulation ou le reste d'un colorant monoazoïque de la formule 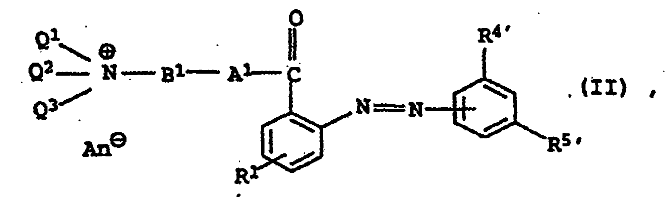
dans laquelle
R4' et R5' signifient, indépendamment l'un de l'autre, hydroxy, amino, morpholino ou mono ou di-(C1-C6)-alkylamino, dont les restes alkyle sont substitués éventuellement par hydroxy, amino, cyano, alkoxycarbonyle en C1-C6, carbomoyle ou mono ou di-(C1-C6)-alkylcarbamoyle, et sont éventuellement interrompus par oxy, et
Q1, Q2 et Q3 indépendamment l'un de l'autre, alkyle en C1-C10, qui peut être interrompu par 1 à 4 groupes oxy, imino non adjacents et éventuellement alkylimino en C1-C4 substitués, et qui peut être substitué par hydroxy, halogène ou phényle, et Q1 et Q2 signifient, avec les atomes d'azote les reliant, un reste hétérocylique à 5 ou 6 éléments, qui présente éventuellement de l'azote ou de l'oxygène comme autre hétéroatome,
et, de plus, n signifie un nombre de 2 à 8 lorsque K représente le reste d'un composant de couplage de la formule IIIa' 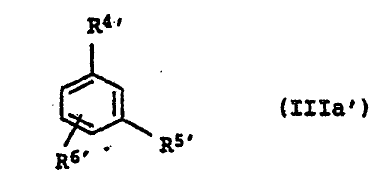 dans laquelle
R6 signifie hydrogène, alkoxy en C1-C6 dont le reste alkyle est.interrompu éventuellement par oxy, mono ou di-(C1-C6)-alkylamino, mono ou di-(C1-C6)-alkylcarbamoyle, carbomoyle, mono ou di-(Cl-C6)-alkylcarbamoyle, sulfamoyle, mono ou di-(C1-C6)-alkylsulfamoyle.

2. Colorants azoïques cationiques selon la revendication 1, dans lesquels n signifie le nombre 1.

3. Colorants azoïques cationiques selon la revendication 1 ou 2 de la formule générale IV 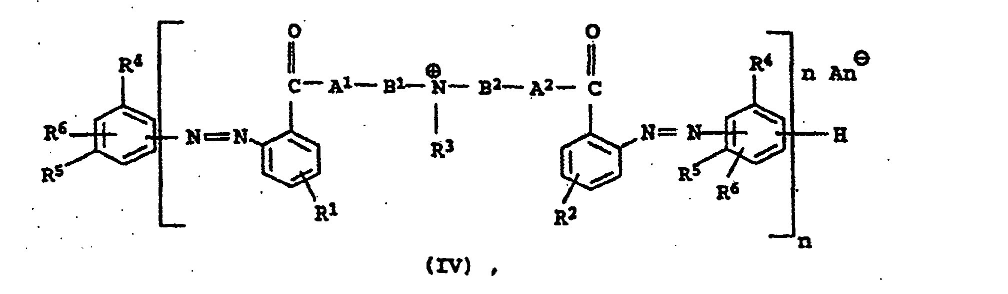 dans laquelle n signifie un nombre de 1 à 8 et R1, R2, R3, R4, R5, R6, A1, A2, B1, R2 et An⊖ ont la signification indiquée dans la revendication 1.

4. Colorants azoïques cationiques selon les revendications 1 à 3, dans lesquels A1 et A2 ainsi que B1 et B2 signifient respectivement le même reste.

5. Colorants azoïques cationiques selon les revendications 1, 3 ou 4, pouvant être obtenus par copulation azoïque de 1 équivalent molaire diamine de la formule V 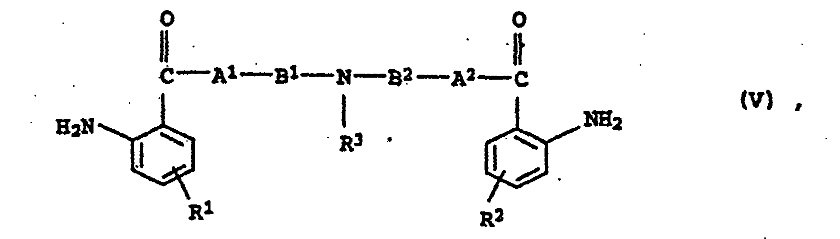 dans laquelle R1, R2, R3, A1, A2, B1 et B2 ont la signification indiquée dans la revendication 1, avec 1 à 2 équivalents molaires d'un composant de copulation de la formule IIIa' 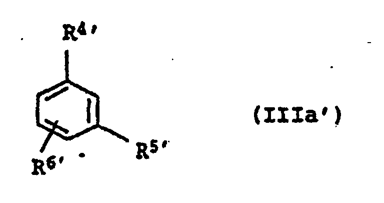 dans laquelle R4', R5' et R6' ont la signification indiquée dans la revendication 1.

6. Colorants azoïques cationiques selon les revendications 1 ou 3 à 5, pouvant être obtenus par copulation azoïque de 1 équivalent molaire diamine V avec 1,5 à 2 équivalents molaires d'un composant de copulation IIIa'.

7. Procédé de fabrication de colorants azoïques cationiques selon les revendications 5 ou 6, dans lequel une ou plusieurs diamines V sont diazotées et copulées sur un ou plusieurs composant de copulation IIIa'.

8. Mélanges de colorants selon les revendications 1 ou 3 à 6 contenant plusieurs colorants de la formule I, qui se différencient par le nombre d'unités de répétition.

9. Utilisation des colorants azoïques cationiques selon la revendication 1 pour colorer ou imprimer de la substance polymère.
